# EUROPEAN PATENT APPLICATION

(11) **EP 3 258 685 A1**
(43) Date of publication of application: **20.12.2017**
(21) Application number: 15839117.7
(22) Date of filing: 06.08.2015
(51) Int. Cl.: H04N 5/765, H04N 5/268

(54) **VIDEO CONTROLLER, PLAY CONTROLLER AND DISPLAY SYSTEM**

(30) Priority: 14.02.2015 CN 201510080545
(71) Applicant: BOE Technology Group Co., Ltd., Beijing 100015 (CN)
(72) Inventor: The designation of the inventor has not yet been filed
(74) Representative: Brötz, Helmut
(86) International application number: PCT/CN2015/086204
(87) International publication number: WO 2016/127602

(57) **Abstract**

A video controller, a playback controller and a display system relate to display field. The video controller comprises a plurality of first DVI interfaces, a decoder and a plurality of second DVI interfaces; each of the first DVI interfaces sends an image data stream received to the decoder; the decoder parses preserved control bits in the first image data stream; the decoder sends the image data stream to a second DVI interface corresponding to image position information; each of the second DVI interfaces outputs the image data stream. The playback controller comprises an encoder and a plurality of third DVI interfaces. The display system comprises the video controller, a display apparatus and the playback controller. The image data stream is outputted according to the image position information thereof, such that an image corresponding to the image data stream can be displayed on a correct position of the display screen with no consideration of the connection sequence between the DVI interfaces of the playback controller and the DVI interfaces of the video controller.

## Description

### TECHNICAL FIELD OF THE DISCLOSURE

The present disclosure relates to a field of display, and particularly to a video controller, a playback controller and a display system.

### BACKGROUND

With extraordinary development of displaying technology, size of a display screen becomes bigger and bigger. In a scenario of performing display with a large size screen, in order to transmit a huge amount of image data, a plurality of digital visual interfaces (DVI) can be arranged correspondingly on both a playback controller and a video controller. The DVI interfaces on the playback controller and the video controller can be connected to each other by a user through a plurality of connection lines, such that an image data stream can be transmitted from the playback controller to the video controller and can thus be displayed by the display screen under the control of the video controller.

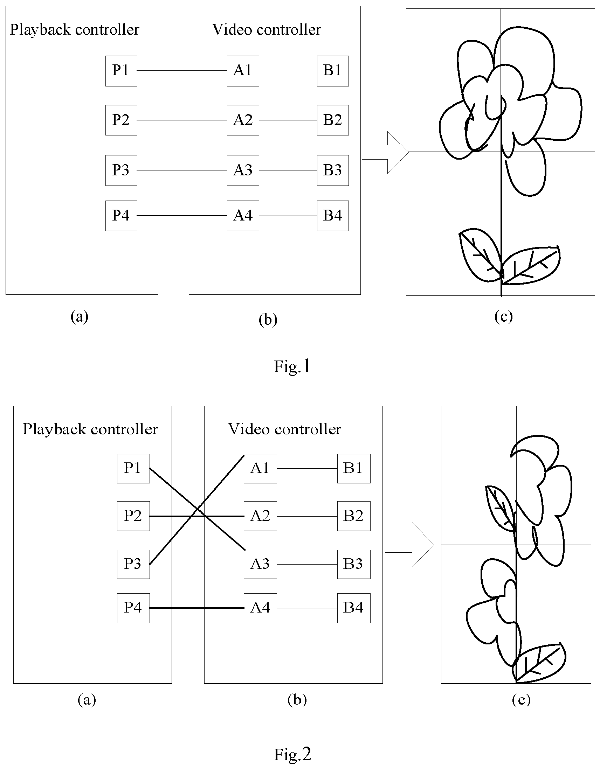

In a specific application, it is required to ensure that the DVI interfaces on the playback controller and the DVI interfaces on the video controller are connected to each other in one-to-one correspondence. When the DVI interfaces on the playback controller and the DVI interfaces on the video controller are connected in sequence correctly, a decoder in the video controller can decode the image data stream transmitted from the playback controller, such that the decoded image data can be displayed on corresponding positions on the display screen, thus achieving normal image display. As shown in Fig.1, diagram (b) of Fig.1 is a schematic diagram of structure of a video controller which comprises four DVI interfaces A1, A2, A3 and A4; diagram (a) of Fig.1 is a schematic diagram of structure of a playback controller which comprises four interfaces P1, P2, P3 and P4; A1, A2, A3 and A4 are connected to P1, P2, P3 and P4 in one-to-one correspondence. A whole flower shown in diagram (c) of Fig.1 can be displayed when the DVI interfaces are connected in sequence correctly.

However, when there are a number of the DVI interfaces on the playback controller and the video controller, it is easy to make a mistake in the connection sequence of the DVI interfaces on the playback controller and the video controller. In this case, an error would occur in the display position of the image transmitted from the playback controller on the display screen. As shown in Fig.2, the DVI interfaces in the diagram (a) and the DVI interfaces in the diagram (b) are connected erroneously, that is, P1 is connected to A3 erroneously and P3 is connected to A1 erroneously, such that the content which should be displayed in a region in the lower left corner in the diagram (c) of Fig.2 is displayed on an display region in the upper left corner and the content which should be displayed in a region in the upper left corner in the diagram (c) of Fig.2 is displayed on an display region in the lower left corner, and thus the picture displayed on the whole display screen is in a mess, rendering a worse display effect.

### SUMMARY

According to a first aspect of embodiments of the present disclosure, there is provided a video controller comprising a plurality of first digital video interfaces DVI, a decoder and a plurality of second DVI interfaces. Each of the first DVI interfaces is configured to receive a first image data stream transmitted from a corresponding DVI interface in a playback controller and send the first image data stream to the decoder, wherein image position information of the first image data stream is carried on preserved control bits of the first image data stream. The decoder is configured to receive the first image data stream sent from each of the first DVI interfaces and parse the preserved control bits of each of the first image data streams so as to obtain the image position information corresponding to each of the first DVI interfaces. The decoder is further configured, for each of the first DVI interfaces, to decode the first image data stream of the first DVI interface received to obtain a second image data stream and send the second image data stream to the second DVI interface corresponding to the image position information corresponding to the first DVI interface. Each of the second DVI interfaces is configured to output the second image data stream received from the decoder.

According to a second aspect of the embodiments of the present disclosure, there is provided a playback controller comprising an encoder and a plurality of third DVI interfaces. For each of a plurality of original image data streams, the encoder encodes the original image data stream to an image data stream and encodes image position information of the original image data stream into preserved control bits of the image data stream, so as to obtain a first image data stream corresponding to the original image data stream, and the encoder sends the first image data stream to one of the third DVI interfaces. Each of the third DVI interfaces outputs the first image data stream received.

According to a third aspect of the embodiments of the present disclosure, there is provided a display system comprising the above described video controller, the above described playback controller and a display apparatus, wherein the plurality of third DVI interfaces of the playback controller are connected to the plurality of first DVI interfaces of the video controller in one-to-one correspondence.

The technical solutions provided in the embodiments of the present disclosure has following advantageous effects: the preserved control bits in the first image data stream received by each of the first DVI interfaces are parsed by the video controller in the present disclosure such that the image position information corresponding to each of the first DVI interfaces can be obtained; the second image data stream decoded from the first image data stream is sent to a corresponding second DVI interface according to the image position information; and then each of the second DVI interfaces outputs the second image data stream received itself for display, such that each of the second image data streams can be sent to the second DVI interface corresponding to its image position information even if there is a mistake in the connection sequence of the DVI interface of the video controller and the DVI interfaces of the playback controller, an error would not occur in the display position of image, a chaotic picture can be avoided, and thus display effect can be improved.

### BRIEF DESCRIPTION OF THE DRAWINGS

In order to explain the technical solutions in the embodiments of the present disclosure more clearly, accompanying drawings required for describing the embodiments of the present disclosure will be introduced. Obviously, the accompanying drawings below are only some embodiments of the present disclosure, and based on the accompanying drawings, other accompanying drawings can be obtained by those skilled in the art without paying inventive labor.
Fig.1 is a schematic diagram of a scenario in which an image is displayed by a large size screen;
Fig.2 is a schematic diagram of another scenario in which an image is displayed by a large size screen;
Fig.3 is a schematic diagram of structure of a video controller provided in an embodiment of the present disclosure;
Fig.4 is a schematic diagram of structure of a playback controller provided in an embodiment of the present disclosure;
Fig.5 is a schematic diagram of encoding scheme provided in an embodiment of the present disclosure;
Fig.6 is a schematic connection diagram of a display system provided in an embodiment of the present disclosure;
Fig.7 is a schematic connection diagram of another display system provided in an embodiment of the present disclosure;
Fig.8 is a schematic flowchart of an image display method provided in an embodiment of the present disclosure; and
Fig.9 is a schematic flowchart of another image display method provided in an embodiment of the present disclosure.

### DETAILED DESCRIPTION

To make the purpose, the technical solutions and the advantages clearer, implementations of the present disclosure will be described below in detail while taken in conjunction with the accompanying drawings.

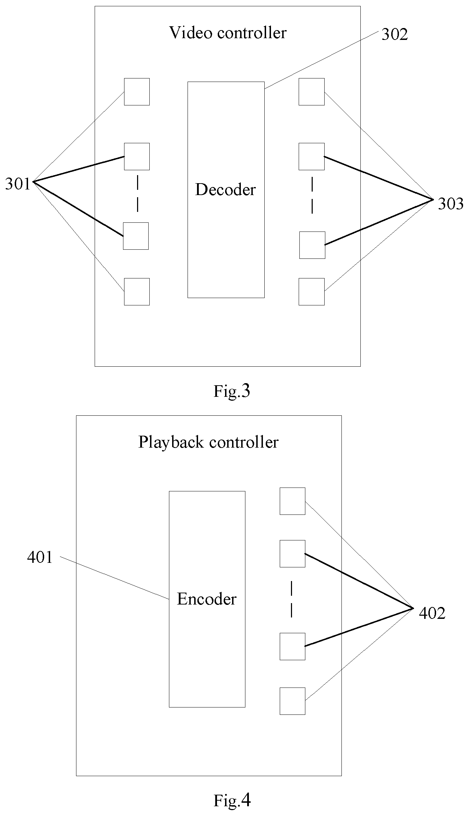

Fig.3 is a schematic diagram of structure of a video controller provided in an embodiment of the present disclosure. The video controller comprises a plurality of first digital video interfaces DVI 301, a decoder 302 and a plurality of second DVI interfaces 303.

Each of the first DVI interfaces 301 is configured to receive a first image data stream transmitted from a corresponding DVI interface of a playback controller and send the first image data stream to the decoder 302, where image position information for the first image data stream is carried on preserved control bits of the first image data stream. The decoder 302 is configured to receive the first image data stream sent from each of the first DVI interfaces 301 and parse the preserved control bits of each of the first image data streams so as to obtain the image position information corresponding to each of the first DVI interfaces 301. The decoder 302 is further configured, for each of the first DVI interfaces 301, to decode the first image data stream of the first DVI interface 301 received to obtain a second image data stream and send the second image data stream to the second DVI interface 303 corresponding to the image position information. Optionally, the decoder 302 can be deployed in a field programmable gate array FPGA chip inside of the video controller, such that the chip possesses decoding function. Each of the second DVI interfaces 303 is configured to receive the second image data stream sent from the decoder and output the same.

It should be explained that the video controller as shown in Fig.3 can further comprise other fundamental devices such as an audio decoder, a wireless transmission interface, a protocol processing unit and the like for implementing video playback function to which no limitation is made in the embodiments of the present disclosure.

The first image data stream has the preserved control bits, for example CTL0-CTL3 (Control), which are commonly idle and do not carry any image data. The preserved control bits can be utilized to carry the image position information. During the process of encoding an original image data stream at the side of the playback controller through any encoding measure, for each of the original image data streams, the image position information of the original image data stream itself is encoded on at least one specified bit among the preserved control bits CTL0-CTL3 of the first image data stream.

As for which bit or bits of the preserved control bits should be decoded by the video controller, an appointment can be made in advance between the playback controller and the video controller. For example, upon initial connection between the playback controller and the video controller, it can be determined that the four bits CTL0-CTL3 in the preserved control bits are utilized to carry the image position information by means of matching parameters between devices. Particularly, for the original image data stream corresponding to the image position 7, the image position information "7" is encoded into CTL0-CTL3 in a binary manner, that is, CTL0-CTL3 carry a value 0111. When the decoder in the video controller receives the first image data stream through any one of the first DVI interfaces, it parses the CTL0-CTL3 as appointed in advance to obtain the value 0111 such that it can be known that the first image data stream should be displayed at the image position 7, parses the first image data stream currently received from the first DVI interface to obtain a second image data stream, and sends the second image data stream to the second DVI interface corresponding to the image position 7 for output by the second DVI interface, thus achieving display of the image.

Particularly, when the decoder 302 parses the image position information, following several manners can be adopted according to the specified bits and the number of the specified bits as appointed in advance.

In a first manner, the decoder 302 is configured to parse the encoding information on one specified bit of CTLO, CTL1, CTL2 and CTL3 in the preserved control bits in the first image data stream.

In a second manner, the decoder 302 is configured to parse the encoding information on two specified bits of CTLO, CTL1, CTL2 and CTL3 in the preserved control bits in the first image data stream.

In a third manner, the decoder 302 is configured to parse the encoding information on three specified bits of CTLO, CTL1, CTL2 and CTL3 in the preserved control bits in the first image data stream.

In a fourth manner, the decoder 302 is configured to parse the encoding information on CTLO, CTL1, CTL2 and CTL3 in the preserved control bits in the first image data stream.

In addition, the decoder 302 can further adopt the value obtained by parsing the encoding information on CTL0 and CTL1 in the preserved control bits in the first image data stream as a value for a high digit and the value obtained by parsing the encoding information on CTL2 and CTL3 in the preserved control bits in the first image data stream as a value for a low digit, and combine the value for the high digit and the value for the low digit to obtain the image position information. Alternatively, the decoder 302 can be particularly configured to adopt the value obtained by parsing the encoding information on CTL0 and CTL1 in the preserved control bits in the first image data stream as a value for a low digit and the value obtained by parsing the encoding information on CTL2 and CTL3 in the preserved control bits in the first image data stream as a value for a high digit, so as to obtain the image position information. As a result, the four preserved control bits can be applied to a device comprising more DVI interfaces, and flexibility of encoding can be improved. For example, the video controller has 33 interfaces in total. Description will be given by taking the case that CTL0 and CTL1 carry the value for the low digit and CTL2 and CTL3 carry the value for the high digit as an example. If CTL0 and CTL1 carry 1 and 1 respectively and CTL2 and CTL3 carry 1 and 1 respectively, CTL0 and CTL1 carry the value 3 for the low digit and CTL2 and CTL3 carry the value 3 for the high digit, and it can thus be determined that the image data stream received at the first DVI interface should be displayed at the 33^{th} display region.

Below, explanations will be given to the second manner in the above four manners by taking the case that the two specified bits are CTL0 and CTL1 as an example. If the image position information obtained by the decoder when parsing CTL0 and CTL1 of the preserved control bits in the first image data stream is a decimal digit 2 and it is assumed that a screen position information of the display region at the upper right corner in (c) of Fig.1, the decoder can determine that the first image data stream should be displayed on the display region (that is, the screen position information is 2) at the right upper corner in (c) of Fig.1 according to the currently parsed image position information.

The image position information of the first image data stream sent from each of the first DVI interfaces and received by the decoder can be obtained by the decoder parsing the preserved control bits in the first image data stream sent from each of the first DVT interfaces, and thus a position where the first image data stream sent from each of the first DVI interfaces should be displayed on the display screen can be determined. While the decoder determines the image position information of the first image data stream, it decodes the first image data stream to obtain the second image data stream and sends the second image data stream to a corresponding one of the second DVI interfaces according to the image position information of the first image data stream, since each of the second DVI interfaces in the video controller corresponds to a different display position on the display screen. For example, if the image position information obtained by the decoder parsing the preserved control bits in the first image data stream sent from a certain one of the first DVI interfaces is a decimal digit 3 and it is assumed that a screen position information of the display region at the lower left corner in (c) of Fig.1 is "3", the decoder sends the second image data stream to the second DVI interface corresponding to the screen position information "3" according to the currently parsed image position information "3" of the first image data stream, such that the second image data stream is displayed on the display region at the lower left corner in (c) if Fig.1.

For other manners in the above four manners, principles are similar to that of the second manner, and repeated descriptions are omitted herein.

It should be explained that the decoder can acquire and store the correspondence relationship between the first DVI interface and the image position information upon the initial connection between the video controller and the playback controller, such that all of the image data stream subsequently transmitted through the first DVI interface can be sent to the second DVI interface corresponding to the image position information, so as to reduce workload for parsing the preserved control bits subsequently. Of course, the process for acquiring the correspondence relationship between the first DVI interface and the image position information may also be performed in real time based on the transmission of the image data stream, and no limitation is made thereto in the embodiments of the present disclosure.

Particularly, the decoder acquires the correspondence relationship between the first DVI interface and the image position information as follows upon initial connection. The image position information corresponding to a certain one of the first DVI interfaces can be obtained after the decoder parsing the first image data stream sent from the first DVI interface for the first time, and the second image data stream is obtained by the decoder decoding the first image data stream on the first DVI interface, the second DVI interface corresponding to the first DVI interface is determined by the decoder according to the image position information corresponding to the first DVI interface, the image position information corresponding to the first DVI interface or the information of the second DVI interface corresponding to the first DVI interface is stored, and the second image data stream is then sent to the second DVI interface. Thereafter, when the first image data stream sent from the first DVI interface is received for a next time, there is no need for parsing the preserved control bits in the first image data stream, and it is only required to send the second image data stream decoded to the corresponding second DVI interface accordingly to the stored image position information corresponding to the first DVI interface or the information of the second DVI interface corresponding to the first DVI interface.

With the video controller provided in the embodiment of the present disclosure, the preserved control bits in the first image data stream received from each of the first DVI interfaces are parsed by the video controller so as to obtain the image position information corresponding to the first DVI interface, and the second image data stream decoded is sent according to the image position information to the second DVI interface corresponding to the image position information, so as to output the second image data stream through the second DVI interface for display. Since each of the second image data streams is sent according to the image position information of the second image data stream to the second DVI interface corresponding to the image position information, each of the second image data streams can be transmitted to the second DVI interface corresponding to its image position information even if there is a mistake in the connection sequence between the DVI interfaces of the video controller and the DVI interfaces of the playback controller, an error would not occur in the display position of image, a chaotic picture can be avoided, and thus display effect can be improved. The preserved control bits in the first image data stream received at each of the first DVI interfaces 301 carry the image position information of the first image data stream which is generated by the playback controller encoding the original image data stream and the image position information.

Fig.4 is a schematic diagram of structure of a playback controller provided in an embodiment of the present disclosure. The playback controller comprises an encoder 401 and a plurality of third DVI interfaces 402.

The encoder 401 is configured to encode an original image data stream to obtain image data streams and encode image position information of the original image data stream into preserved control bits for the image data streams so as to obtain first image data streams, and send the first image data streams to the third DVI interfaces. Optionally, the encoder 401 can be deployed in a field programmable gate array FPGA chip inside of the playback controller, such that the chip possesses encoding function. Each of the third DVI interfaces 402 is configured to receive the first image data stream from the encoder and output the same.

It should be explained that the playback controller as shown in Fig.4 can further comprise other fundamental devices such as an audio encoder, a wireless transmission interface, a protocol processing unit and the like for implementing video playback function to which no limitation is made in the embodiments of the present disclosure.

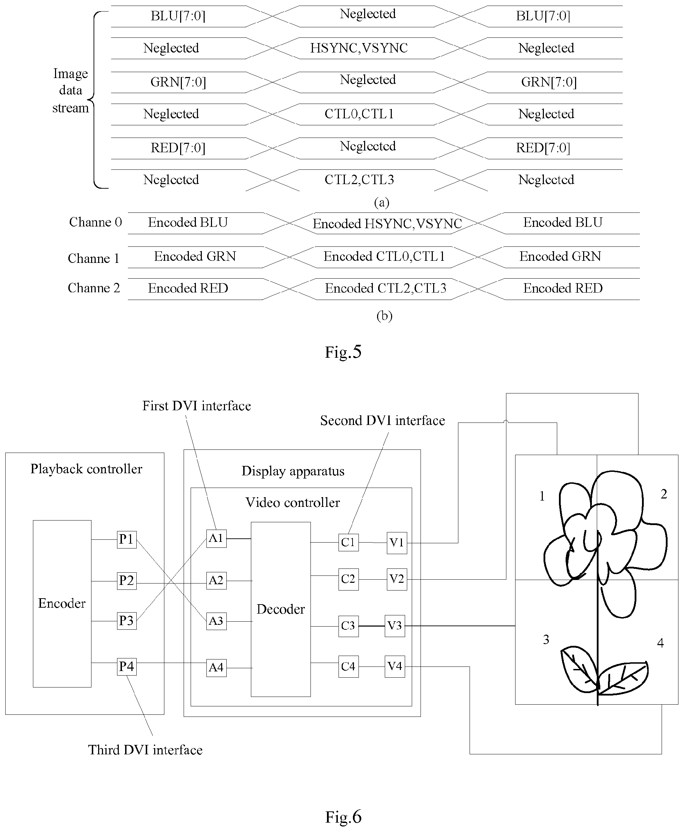

As for which bit or bits of the preserved control bits should be encoded by the playback controller, an appointment can be made in advance between the playback controller and the video controller. The encoding scheme of the preserved control bits for the image data streams can be referred to Fig.5.

Fig.5 is a schematic diagram of encoding scheme provided in an embodiment of the present disclosure. In the schematic diagram, diagram (a) of Fig.5 is a schematic diagram of pattern of the original image data stream, and diagram (b) of Fig.5 is a schematic diagram of pattern of the first image data stream. With reference to the diagram (a) of Fig.5, it can be seen that the preserved control bits are commonly idle. Particularly, the preserved control bits CTLO, CTL1, CTL2 and CTL3 are idle in the original image data stream during the time period corresponding to the image data. Therefore, the preserved control bits CTLO, CTL1, CTL2 and CTL3 can be utilized to carry the image position information. The encoding manner on the image position information by the playback controller may be as follows: the image position information is encoded to specified bit(s) of CTLO, CTL1, CTL2 and CTL3 in the preserved control bits for the image data stream, the number of the specified bit(s) may be at least one. To explain the optional embodiments of the present disclosure in detail, the encoding scheme of the image position information will be introduced below for different number of specified bits. The encoding scheme of the image position information can comprise the following manners.

In a first manner, the playback controller encodes the image position information into one specified bit of CTLO, CTL1, CTL2 and CTL3 in the preserved control bits for the image data stream.

Two different types of encoding information can be obtained by the playback controller encoding the image position information into the one specified bit of CTLO, CTL1, CTL2 and CTL3 in the preserved control bits for the image data stream, and the different types of encoding information correspond to different display positions on the display screen. The image position information obtained by encoding the preserved control bits in the first image data stream can represent the position region of the display screen on which the first image data stream should be displayed.

For example, if it is assumed that one display screen is divided into two sub display screens comprising an upper sub display screen and a lower sub display screen and the encoding manner adopts binary encoding, two types of encoding information comprising 0 and 1 can be obtained when one specified bit of CTLO, CTL1, CTL2 and CTL3 being utilized for encoding. At this time, 0 can correspond to the sub display screen at the upper position of the display screen, and 1 can correspond to the sub display screen at the lower position of the display screen. When the image position information corresponding to a certain first image data stream is 0, it is represented that the first image data stream should be displayed on the sub display screen at the upper position of the whole display screen. Similarly, when the image position information corresponding to a certain first image data stream is 1, it is represented that the first image data stream should be displayed on the sub display screen at the lower position of the whole display screen.

In a second manner, the playback controller encodes the image position information into two specified bits of CTLO, CTL1, CTL2 and CTL3 in the preserved control bits for the image data stream.

As compared to the first manner, more types of encoding information can be obtained when the second manner is adopted to encode different image data streams, and each of the different types of encoding information corresponds to a different display position on the display screen.

For example, if the encoding manner adopts binary encoding and the playback controller encodes the image position information into the two specified bits of CTLO, CTL1, CTL2 and CTL3 in the preserved control bits for the image data streams, four different types of encoding information can be obtained, that is, 00, 01, 10 and 11. With reference to the diagram (c) of Fig.1, for example, 00 can correspond to the display region at the upper left corner in the diagram (c) of Fig.1, 00 can correspond to the display region at the upper left corner in the diagram (c) of Fig.1, 01 can correspond to the display region at the lower left corner in the diagram (c) of Fig.1, 10 can correspond to the display region at the upper right corner in the diagram (c) of Fig.1, and 11 can correspond to the display region at the lower right corner in the diagram (c) of Fig.1. When the image position information corresponding to a certain first image data stream is 00, it can be determined that the first image data stream should be displayed on the display region at the upper left corner in the diagram (c) of Fig.1 .

In a third manner, the playback controller encodes the image position information into three specified bits of CTLO, CTL1, CTL2 and CTL3 in the preserved control bits in the image data stream.

As compared to the second manner, more types of encoding information can be obtained when the third manner is adopted to encode different image data streams, and each of the different types of encoding information corresponds to a different display position on a whole display screen. When there are multiple channels for image data streams at the side of the playback controller, the playback controller can adopt the third manner to encode the preserved control bits in the image data streams.

The principle of the third manner is similar to those of the first manner and the second manner, and repeated descriptions are omitted herein.

In a fourth manner, the playback controller encodes the image position information into CTLO, CTL1, CTL2 and CTL3 in the preserved control bits in the image data stream.

As compared to the third manner, more types of encoding information can be obtained when the fourth manner is adopted to encode different image data streams, and each of the different types of encoding information corresponds to a different display position on a whole display screen. When there are multiple channels for image data streams at the side of the playback controller, the playback controller can adopt the fourth manner to encode the preserved control bits in the image data streams.

The principle of the fourth manner is similar to those of the above manners, and repeated descriptions are omitted herein.

In addition, the playback controller in the embodiment of the present disclosure can further encode a value of a high digit of the image position information into CTL0 and CTL1 in the preserved control bits in the image data stream and a value of a low digit of the image position information into CTL2 and CTL3 in the preserved control bits in the image data stream; or encode a value of a low digit of the image position information into CTL0 and CTL1 in the preserved control bits in the image data stream and a value of a high digit of the image position information into CTL2 and CTL3 in the preserved control bits in the image data stream. As a result, the four preserved control bits can be applied to a device comprising more DVI interfaces, and flexibility of encoding can be improved. For example, the playback controller has 33 interfaces in total. In case that CTL0 and CTL1 carry the value of the low digit and CTL2 and CTL3 carry the value of the high digit, CTL0 and CTL1 may carry 1 and 1 respectively and CTL2 and CTL3 may carry 1 and 1 respectively, so as to represent the 33^{th} display region.

For large screen display technology, the display apparatus may have an entire display screen, or may have a plurality of sub display apparatuses each of which has its own display screen. That is, the following two cases may exist.

In a first manner, the video controller is disposed inside the display apparatus which has a display screen.

In this case, the video controller further comprises a plurality of display control units, each of which is configured to control image display on a region of the display screen and is connected to one of the second DVI interfaces in the video controller so as to receive the image video stream from the second DVI interface, such that the display control unit displays an image on a corresponding region of the display screen.

For the first manner, the playback controller is connected to the video controller in the display apparatus, and the particular connection may be referred to the structure in Fig.6. In Fig.6, the playback controller comprises an encoder and four third DVI interfaces P1, P2, P3 and P4, and the display apparatus comprises the video controller comprising a decoder, four first DVI interfaces A1, A2, A3 and A4, four second DVI interfaces C1, C2, C3 and C4 and four display control units V1, V2, V3 and V4. The four second DVI interfaces C1, C2, C3 and C4 are connected to the four display control units V1, V2, V3 and V4 respectively, and the four display control units V1, V2, V3 and V4 control the display regions 1 to 4 of the display apparatus respectively. The diagram comprising a flower in Fig.6 is an effect diagram of image display.

It is assumed that the pieces of image position information of the first image data streams sent from the third DVI interfaces P1-P4 in Fig.6 are 1, 2, 3 and 4 respectively. Although the third DVI interface P1 is connected to the first DVI interface A3 erroneously and the third DVI interface P3 is connected to the first DVI interface A1 erroneously, the decoder in the video controller can determine that the image position information of the first image data stream sent from the first DVI interface A1 is 3 after parsing the preserved control bits in the first image data stream received at the first DVI interface A1. At this time, the decoder obtains a second image data stream after decoding the first image data stream and sends the second image data stream to the second DVI interface C3 connected to the display control unit 3, such that the second image data stream can be displayed on the screen region whose screen position information is 3. Similarly, the decoder operates to enable the first image data stream sent from the first DVI interface A3 to be correctly displayed on the screen region whose screen position information is 1. As a result, images can be displayed on correct positions in the embodiments of the present disclosure even if there is a mistake in the connection sequence between the DVI interfaces of the playback controller and the DVI interfaces of the video controller.

In a second manner, the video controller is independent from the display apparatus, and the display apparatus comprises a plurality of sub display apparatuses each of which may comprise at least one DVI interface.

Here, the video controller and the display apparatus may be two independent devices, or may be two independent elements located in a certain device, to which no limitation is made in the embodiments of the present disclosure.

Each of the second DVI interfaces in the video controller is connected to a corresponding sub display apparatus in the display apparatus, such that the second image data stream sent from the second DVI interface can be displayed on the sub display apparatus.

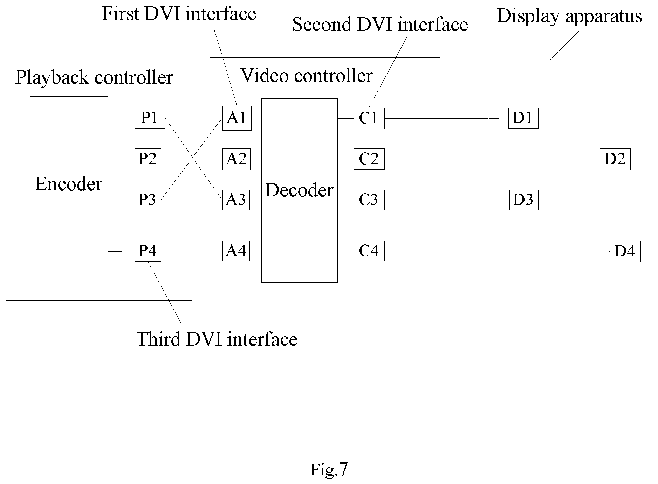

For the second manner, the playback controller is connected to the video controller, the video controller is connected to the plurality of sub display apparatuses, and the particular connection may be referred to the structure shown in Fig.7. The playback controller comprises an encoder and fourth third DVI interfaces P1, P2, P3 and P4, the video controller comprises a decoder, four first DVI interfaces A1, A2, A3 and A4 and four second DVI interfaces C1, C2, C3 and C4, the display apparatus comprises four sub display apparatuses D1 to D4, and C1 to C4 are connected to D1 to D4 respectively.

In Fig.7, the third DVI interface P1 is connected to the first DVI interface A3 erroneously and the third DVI interface P3 is connected to the first DVI interface A1 erroneously, however the decoder in the video controller can determine that the image position information corresponding to the first image data stream sent from the first DVI interface A1 is 3 after parsing the preserved control bits in the first image data stream. At this time, the decoder obtains a second image data stream after decoding the first image data stream, and sends the second image data stream to the second DVI interface C3, such that the second image data stream can be displayed on the sub display apparatus D3. Similarly, the decoder operates to enable the first image data stream sent from the first DVI interface A3 to be displayed on the sub display apparatus D1. As a result, images can be displayed on correct positions in the embodiments of the present disclosure even if there is a mistake in the connection sequence between the DVI interfaces of the playback controller and the DVI interfaces of the video controller.

Furthermore, the respective second DVI interfaces in the video controller are further configured to receive the screen position information sent from the respective sub display apparatuses, and the decoder is further configured to establish and store the correspondence relationship between the respective sub display apparatuses and the respective second DVI interfaces, such that once the decoder determines the image position information of the first image data stream, it can send the decoded second image data stream to a corresponding one of the second DVI interfaces according to the image position information and the stored correspondence relationship between the respective sub display apparatuses and the respective second DVI interfaces.

It should be explained that the screen position information of the respective sub display apparatuses can be determined after the respective sub display apparatuses are assembled completely. To aim that the video controller knows which one of the second DVI interfaces corresponds to which one of the sub display apparatuses, each of the respective sub display apparatuses can send its screen position information via extended display identification data EDID information to the video controller, and thus based on the screen position information and the second DVI interface which receives the screen position information, the video controller can establish and store the correspondence relationship between the sub display apparatus and the second DVI interface.

With the video controller provided in the embodiments of the present disclosure, the preserved control bit(s) in the image data stream is parsed by the decoder such that the image position information corresponding to each of the first DVI interfaces can be obtained, and then the image data streams can be sent to different second DVI interfaces according to the image position informationsuch that each of the second DVI interfaces can output the image data stream received for display. As a result, images corresponding to the image data streams can be displayed on correct positions of the display screen in the embodiments of the present disclosure with no consideration of the connection sequence between the DVI interfaces of the playback controller and the DVI interfaces of the video controller.

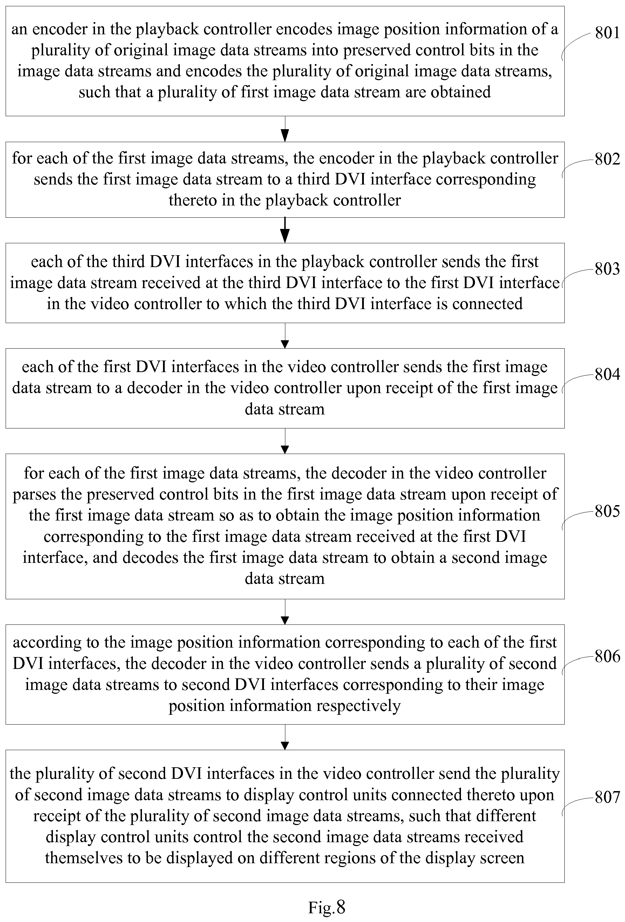

Based on the above first manner and the device structure shown in Fig.3 and Fig.4, the playback controller and the video controller in the display apparatus can be connected as shown in Fig.6 to constitute a display system. Based on such display system, an image display method is further provided in the embodiments of the present disclosure, as shown in Fig.8.

At step 801, for each of original image data streams, it is encoded to its image data stream and image position information thereof is encoded to preserved control bits in the image data stream by an encoder in the playback controller, such that a first image data stream is obtained.

Particularly, a plurality of first image data streams are generated by the encoder in the playback controller based on a plurality of original image data streams and their image position information.

The manner in which the preserved control bits are encoded by the encoder in the playback controller has been described above in detail, and repeated descriptions will be omitted herein.

At step 802, for each of the first image data streams, the encoder in the playback controller sends the first image data stream to a third DVI interface corresponding thereto in the playback controller.

A third DVI interface corresponding to a certain first image data stream may be the third DVI interface connected fixedly to a pin of the encoder from which the first image data stream is outputted.

Particularly, the encoder in the playback controller sends a plurality of first image data streams to a plurality of third DVI interfaces in one-to-one correspondence with the plurality of first image data streams in the playback controller.

At step 803, each of the third DVI interfaces in the playback controller sends the first image data stream received at the third DVI interface to the first DVI interface in the video controller to which the third DVI interface is connected.

Particularly, the plurality of third DVI interfaces in the playback controller send the plurality of first image data streams to the plurality of first DVI interfaces in the video controller to which the plurality of the third DVI interfaces are connected one by one.

At step 804, each of the first DVI interfaces in the video controller sends the first image data stream to a decoder in the video controller upon receipt of the first image data stream.

At step 805, for each of the first image data streams, the decoder in the video controller parses the preserved control bits in the first image data stream upon receipt of the first image data stream so as to obtain the image position information corresponding to the first image data stream received at the first DVI interface, and decodes the first image data stream to obtain a second image data stream.

As a result, the decoder decodes the plurality of first image data streams to obtain a plurality of second image data streams. The decoder performs the same processing on the first image data stream received at each of the first DVI interfaces as that in the step 805, and repeated descriptions are omitted herein.

At step 806, for each of the first DVI interfaces, according to the image position information corresponding to the first DVI interface, the decoder in the video controller sends the second image data stream decoded from the first image data stream received at the first DVI interface to a second DVI interface corresponding to its image position information.

At step 807, each of the second DVI interfaces in the video controller sends the second image data stream to a display control unit connected to the second DVI interface upon receipt of the second image data stream, such that the display control unit can display the second image data stream on a corresponding region of a display screen.

As a result, different display control units receive different second image data streams from different second DVI interfaces, and display the different second image data streams on different regions of the display screen.

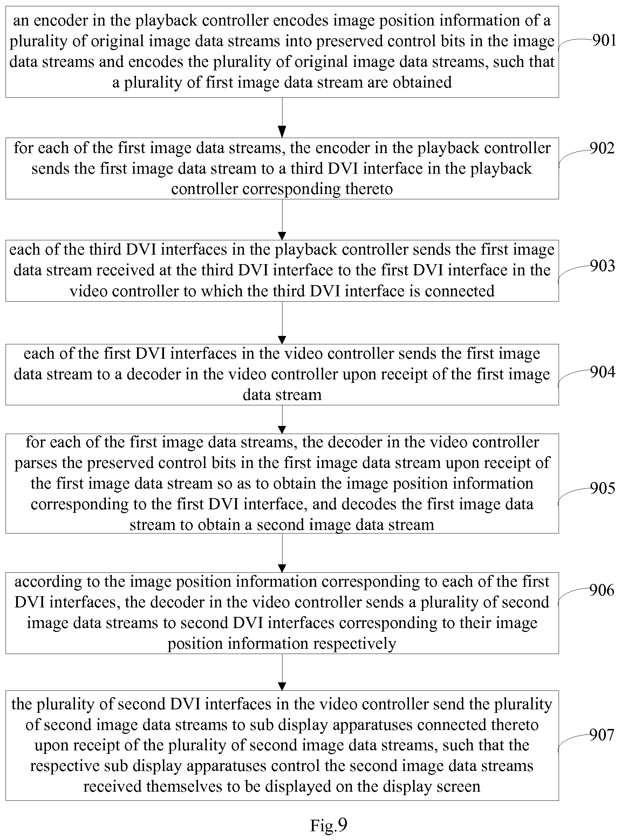

Based on the above second manner and the device structure shown in Fig.3 and Fig.4, the playback controller, the video controller, and the respective display apparatuses in the display apparatus can be connected as shown in Fig.7 to constitute a display system. Based on such display system, an image display method is further provided in the embodiments of the present disclosure, as shown in Fig.9.

At step 901, for each of original image data streams, it is encoded to its image data stream and image position information thereof is encoded to preserved control bits in the image data stream by an encoder in the playback controller, such that a first image data stream is obtained.

Particularly, a plurality of first image data streams are generated by the encoder in the playback controller based on a plurality of original image data streams and their image position information.

At step 902, for each of the first image data streams, the encoder in the playback controller sends the first image data stream to a third DVI interface corresponding thereto in the playback controller.

Particularly, the encoder in the playback controller sends a plurality of first image data streams to a plurality of third DVI interfaces in one-to-one correspondence with the plurality of first image data streams in the playback controller.

At step 903, each of the third DVI interfaces in the playback controller sends the first image data stream received at the third DVI interface to the first DVI interface in the video controller to which the third DVI interface is connected.

Particularly, the plurality of third DVI interfaces in the playback controller send the plurality of first image data streams to the plurality of first DVI interfaces in the video controller to which the plurality of the third DVI interfaces are connected one by one.

At step 904, each of the first DVI interfaces in the video controller sends the first image data stream to a decoder in the video controller upon receipt of the first image data stream.

Before the step 904, each of the second DVI interfaces in the video controller can further receive screen position information sent from a sub display apparatus corresponding thereto, and send the screen position information received to the decoder, such that the decoder can establish and store the correspondence relationship between the respective second DVI interfaces and the respective sub display apparatuses according to the screen position information of the respective sub display apparatuses.

At step 905, for each of the first image data streams, the decoder in the video controller parses the preserved control bits in the first image data stream upon receipt of the first image data stream so as to obtain the image position information corresponding to the first image data stream received at the first DVI interface, and decodes the first image data stream to obtain a second image data stream.

As a result, the decoder decodes the plurality of first image data streams to obtain a plurality of second image data streams. The steps 901-905 are similar to the above steps 801-805, and repeated descriptions are omitted herein.

At step 906, for each of the first DVI interfaces, according to the image position information corresponding to the first DVI interface, the decoder in the video controller sends the second image data stream decoded from the first image data stream received at the first DVI interface to a second DVI interface corresponding to its image position information.

Particularly, according to the image position information of the plurality of first image data streams, the decoder in the video controller sends a plurality of second image data streams decoded from the plurality of first image data streams to a plurality of second DVI interfaces in one-to-one correspondence with the image position information of the plurality of first image data streams.

At step 907, each of the second DVI interfaces in the video controller sends the second image data stream to a DVI interface of the sub display apparatus connected to the second DVI interface upon receipt of the second image data stream, such that the sub display apparatus can display the second image data stream.

As a result, different sub display apparatuses receive different second image data streams from different second DVI interfaces, and display the different second image data streams on their display screens respectively.

It can be understood by those skilled in the art that all or part of steps in the above embodiments can be implemented through hardware or through related hardware instructed by a program which can be stored in a computer readable storage medium such as ROM, magnetic disk, optical disk and the like.

The above descriptions are only for illustrating the preferred embodiments of the present disclosure, and in no way limit the scope of the present disclosure. Any modifications, equivalent replacements, improvements and the like thereto without departing the spirit and principle of the present disclosure are intended to be included within the protection scope of the present disclosure.

This application claims priority to a Chinese Patent Application No. 201510080545.2, filed on February 14, 2015, titled as "VIDEO CONTROLLER, DISPLAY APPARATUS, PLAYBACK CONTROLLER AND DISPLAY SYSTEM", in the China's State Intellectual Property Office, the disclosure of which is incorporated by reference herein as a whole.

## Claims

1. A video controller comprising:
a plurality of first digital video interfaces DVI, a decoder and a plurality of second DVI interfaces;
wherein each of the first DVI interfaces is configured to receive a first image data stream transmitted from a corresponding DVI interface in a playback controller and send the first image data stream to the decoder, wherein image position information of the first image data stream is carried on preserved control bits of the first image data stream;
the decoder is configured to receive the first image data stream sent from each of the first DVI interfaces and parse the preserved control bits of each of the first image data streams so as to obtain the image position information corresponding to each of the first DVI interfaces;
the decoder is further configured, for each of the first DVI interfaces, to decode the first image data stream of the first DVI interface received to obtain a second image data stream and send the second image data stream to the second DVI interface corresponding to the image position information corresponding to the first DVI interface;
each of the second DVI interfaces is configured to output the second image data stream received from the decoder.

2. The video controller of claim 1, further comprising a plurality of display control units; each of the second DVI interfaces is only connected to a different one of the plurality of display control units.

3. The video controller of claim 1, wherein the video controller is connected to a display apparatus comprising a plurality of sub display apparatuses, and each of the second DVI interfaces is only connected to a DVI interface of a different one of the plurality of sub display apparatuses.

4. The video controller of claim 3, wherein
each of the second DVI interfaces is further configured to receive screen position information sent from the sub display apparatus connected thereto;
the decoder is further configured to establish and store correspondence relationship between the plurality of sub display apparatuses and the plurality of second DVI interfaces according to the screen position information of the plurality of sub display apparatuses.

5. The video controller of claim 1, wherein
the decoder is configured to parse at least one specified bit among control data CTLO, CTL1, CTL2 and CTL3 of the preserved control bits of the first image data stream received from each of the first DVI interfaces to obtain the image position information corresponding to each of the first DVI interfaces.

6. The video controller of claim 1, wherein
the decoder is configured to adopt a value obtained by parsing encoding information on CTL0 and CTL1 in the preserved control bits in the first image data stream as a value for a high digit and a value obtained by parsing encoding information on CTL2 and CTL3 in the preserved control bits in the first image data stream as a value for a low digit, and combine the value for the high digit and the value for the low digit to obtain the image position information; or
the decoder is particularly configured to adopt a value obtained by parsing encoding information on CTL0 and CTL1 in the preserved control bits in the first image data stream as a value for a low digit and a value obtained by parsing encoding information on CTL2 and CTL3 in the preserved control bits in the first image data stream as a value for a high digit, so as to obtain the image position information.

7. The video controller of any one of claims 1-6, wherein
the decoder is a field programmable gate array FPGA chip.

8. A playback controller comprising:
an encoder and a plurality of third DVI interfaces;
for each of a plurality of original image data streams, the encoder encodes the original image data stream to an image data stream and encodes image position information of the original image data stream into preserved control bits of the image data stream, so as to obtain a first image data stream corresponding to the original image data stream, and the encoder sends the first image data stream to one of the third DVI interfaces;
each of the third DVI interfaces outputs the first image data stream received.

9. The playback controller of claim 8, wherein
the encoder is configured to encode the image position information onto at least one specified bit among the preserved control bits CTLO, CTL1, CTL2 and CTL3 in the image data stream.

10. The playback controller of claim 8, wherein the encoder is configured to
encode a value of a high digit of the image position information into CTL0 and CTL1 in the preserved control bits in the image data stream and a value of a low digit of the image position information into CTL2 and CTL3 in the preserved control bits in the image data stream; or
encode a value of a low digit of the image position information into CTL0 and CTL1 in the preserved control bits in the image data stream and a value of a high digit of the image position information into CTL2 and CTL3 in the preserved control bits in the image data stream.

11. The playback controller of any one of claims 8-10, wherein the encoder is a field programmable gate array FPGA chip.

12. A display system comprising the video controller of claim 1, the playback controller of claim 8 and a display apparatus,
wherein the plurality of third DVI interfaces are connected to the plurality of first DVI interfaces in one-to-one correspondence.

13. The display system of claim 12, wherein the video controller further comprises a plurality of display control units, and the display apparatus comprises a plurality of display regions,
each of the second DVI interfaces is only connected to a different one of the plurality of display control units;
each of the display control units is configured to control image display on a different one of the display regions of a display screen of the display apparatus.

14. The display system of claim 12, wherein
the display apparatus comprises a plurality of sub display apparatuses each of which comprises at least one DVI interface,
the video controller is connected to the display apparatus, and each of the second DVI interfaces is only connected to a DVI interface of a different one of the sub display apparatuses.

15. The display system of claim 14, wherein
each of the second DVI interfaces is further configured to receive screen position information sent from the sub display apparatus connected thereto;
the decoder is further configured to establish and store correspondence relationship between the plurality of sub display apparatuses and the plurality of second DVI interfaces according to the screen position information of the plurality of sub display apparatuses.

16. The display system of claim 12, wherein
the decoder is configured to parse at least one specified bit among control data CTLO, CTL1, CTL2 and CTL3 of the preserved control bits of the first image data stream received from each of the first DVI interfaces to obtain the image position information corresponding to each of the first DVI interfaces.

17. The display system of claim 12, wherein
the decoder is configured to adopt a value obtained by parsing encoding information on CTL0 and CTL1 in the preserved control bits in the first image data stream as a value for a high digit and a value obtained by parsing encoding information on CTL2 and CTL3 in the preserved control bits in the first image data stream as a value for a low digit, and combine the value for the high digit and the value for the low digit to obtain the image position information; or
the decoder is particularly configured to adopt a value obtained by parsing encoding information on CTL0 and CTL1 in the preserved control bits in the first image data stream as a value for a low digit and a value obtained by parsing encoding information on CTL2 and CTL3 in the preserved control bits in the first image data stream as a value for a high digit, so as to obtain the image position information.
